# DEMANDE DE BREVET EUROPEEN

(11) **EP 3 338 981 A1**
(43) Date de publication de la demande: **27.06.2018**
(21) Numéro de dépôt: 17208362.8
(22) Date de dépôt: 19.12.2017
(51) Int. Cl.: B29C 33/04, B29C 35/00, F28F 21/00

(54) **SYSTÈME DE MOULAGE DES PIÈCES EN PLASTIQUE**

(30) Priorité: 22.12.2016 CN 201621420977 U
(71) Demandeur: Compagnie Plastic Omnium, 69007 Lyon (FR)
(72) Inventeur: TORRES, Olivier, 69230 Saint Genis Laval (FR)
(74) Mandataire: LLR

(57) **Abrégé**

Système de moulage (10) des pièces en plastique, comportant un moule (12) et au moins un thermo-régulateur (13), au moins un circuit d'échange de chaleur (14) étant au moins partiellement intégré dans le moule (12), chaque thermo-régulateur (13) alimentant un des circuits d'échange de chaleur (14). Le système de moulage est caractérisé en ce qu'il comporte au moins un échangeur de chaleur (20) situé à l'extérieur du moule (12) et comprenant un canal secondaire (34) qui constitue une partie de l'échangeur de chaleur (14).

## Description

La présente invention concerne le domaine du moulage de pièces en plastique, et notamment un système de moulage des pièces en matériau thermoplastique de grandes dimensions pour des véhicules automobiles.

Dans le secteur de la construction automobile, afin de réduire la masse totale et de diminuer la consommation de carburant, de plus en plus de pièces sont fabriquées en matière plastique, notamment pour ce qui est des pièces esthétiques de grandes dimensions et des pièces structurels. Un autre avantage des pièces en plastique est qu'elles sont fabriquées par moulage et par conséquent leurs dimensions sont précises, leurs formes peuvent être complexes et la technologie de mise en forme est plus simple que celle pour des pièces métalliques.

Pour permettre le refroidissement et le formage des pièces moulées en cours de moulage, il est habituellement nécessaire de prévoir des moyens de refroidissement à l'intérieur du moule, par exemple un circuit d'échange de chaleur placé à proximité de la surface de moulage et dans lequel circule un fluide de refroidissement (par exemple de l'eau). Le circuit d'échange de chaleur est déterminé par des rainures placées à l'intérieur du moule et par des bouchons placés à l'extrémité ou au milieu des rainures. Pour permettre un contrôle précis de la température du moule, le circuit d'échange de chaleur est muni d'un thermo-régulateur, qui comprend des dispositifs, tels qu'une pompe qui alimente le circuit d'échange de chaleur avec le fluide de refroidissement, une sonde de température nécessaire pour la régulation de la température, un système de refroidissement et un système de contrôle.

Or, le volume des pièces de véhicules automobiles est en général assez important, et les dimensions des moules sont en conséquence relativement grandes également. Si un seul circuit d'échange de chaleur est mis en place, le fluide de refroidissement, pendant son écoulement, voit sa température augmenter rapidement, ce qui provoque une détérioration sensible de l'effet de refroidissement dans la portion postérieure du circuit d'échange de chaleur. Dès lors, la température des différentes parties des pièces en cours de moulage n'est pas uniforme, ce qui induit des problèmes tels qu'une déformation partielle ou un manque d'uniformité des pièces. C'est pourquoi, dans les moules de grandes dimensions, sont généralement mis en place plusieurs circuits d'échange de chaleur, chaque circuit d'échange de chaleur se voyant alimenter (par pompage) et voyant sa température régulée par un thermo-régulateur indépendant.

Cependant, le prix des régulateurs de température est élevé (le prix peut varier de plusieurs dizaines, voire plusieurs centaines de milliers d'euros selon les cas), leur consommation électrique est très importante (en général entre 20 et 90 kilowatts) et en outre leur encombrement est important. Pour des questions de coût, on est contraint de réduire le nombre de circuits d'échange de chaleur et de régulateurs de température et de choisir de sacrifier partiellement la précision des pièces moulées.

Le but de la présente invention est de fournir un système de moulage présentant un ratio coût/efficacité élevé et économe en énergie, tout en garantissant, autant que faire se peut, une évolution synchrone de la température pendant le moulage des pièces, et la précision des pièces qui découle de cette évolution synchrone.

Pour cela, l'un des objets de la présente invention est un système de moulage des pièces en plastique et comprenant un moule et au moins un thermo-régulateur ; au moins un circuit d'échange de chaleur est au moins partiellement intégré dans le moule ; chaque thermo-régulateur alimente un circuit d'échange de chaleur ; le système de moulage est caractérisé en ce qu'il comporte au moins un échangeur de chaleur positionné à l'extérieur du moule et comportant un canal secondaire qui constitue une partie du circuit d'échange de chaleur.

On entend le terme « thermo-régulateur » par un équipement de contrôle et d'alimentation du circuit d'échange de chaleur, comportant à cet effet des dispositifs tels qu'une pompe, un dispositif de régulation de la température du fluide d'échange de chaleur, un système de contrôle de la température, etc. Il est capable de pomper un fluide d'échange de chaleur de température prédéterminée jusqu'à l'entrée du circuit d'échange de chaleur, de faire circuler ce fluide dans le circuit d'échange de chaleur, de récupérer à la sortie du circuit d'échange de chaleur le fluide d'échange de chaleur qui s'écoule et dont la température a déjà changé, puis de refroidir ou de réchauffer le fluide d'échange de chaleur de façon à le porter à la température prédéterminée, afin de compléter le cycle du fluide d'échange de chaleur. Or, ledit « échangeur de chaleur » ne possède pas la fonction d'alimenter le circuit d'échange de chaleur (c'est-à-dire qu'il n'est pas capable de fournir la force motrice pour le fluide d'échange de chaleur) et n'est pas non plus en mesure de contrôler de façon précise la température du fluide d'échange de chaleur.

On entend le terme « circuit d'échange de chaleur » par la voie de circulation du fluide d'échange de chaleur ; il se trouve en général à proximité de la surface de moulage et il est constitué au moins partiellement d'une rainure se trouvant dans le moule. Le fluide d'échange de chaleur est en général liquide, par exemple de l'eau. Le moule peut comporter plusieurs circuits d'échange de chaleur, chaque circuit d'échange de chaleur étant alimenté et sa température étant régulée individuellement par un thermo-régulateur indépendant ; autrement dit, à chaque circuit d'échange de chaleur correspond un thermo-régulateur. Bien entendu, plusieurs thermo-régulateurs peuvent être intégrés de façon à constituer un système de régulation de la température, dans lequel tous les thermo-régulateurs partagent un même système de régulation de la température.

Selon la présente invention, chaque circuit d'échange de chaleur comporte également un ou plusieurs échangeurs de chaleur positionnés à l'extérieur du moule ; le canal secondaire de l'échangeur de chaleur constitue une partie du circuit d'échange de chaleur. Dès lors, le fluide d'échange de chaleur se trouvant dans le circuit d'échange de chaleur s'écoule sur une certaine distance à l'extérieur du moule en suivant le canal secondaire avant de rentrer dans le moule. Par exemple, pour un échangeur de chaleur servant à refroidir le fluide d'échange de chaleur, la température à l'extérieur du moule étant inférieure à celle à l'intérieur du moule, le fluide d'échange de chaleur est refroidi dans le canal secondaire, si bien que la température du fluide qui retourne dans le moule a été abaissée, de sorte qu'elle n'augmente pas trop vite, ce qui provoquerait un manque d'homogénéité de la température de la pièce à mouler. Or, à la différence d'un thermo-régulateur, un échangeur de chaleur ne nécessite pas des fonctions et des dispositifs complexes, et ne contient qu'un canal très simple qui suffit à atteindre l'objectif d'abaissement de la température, ce qui permet de réduire sensiblement le coût. Bien sûr, l'échangeur de chaleur peut aussi servir à augmenter la température du fluide d'échange de chaleur, et permet très simplement, suivant le même principe, de réguler la température du fluide d'échange de chaleur et de retarder son refroidissement.

Le système de moulage selon la présente invention peut présenter, de façon indépendante ou en combinaison, l'une ou plusieurs des caractéristiques techniques suivantes :
- L'échangeur de chaleur est constitué d'un boîtier en accordéon. Cette forme en accordéon permet d'augmenter la surface de contact entre la paroi du canal secondaire et l'air ambiant, afin d'améliorer l'efficacité de l'échange de chaleur.
- Un radiateur de chaleur est mis en place autour du boîtier. Le radiateur de chaleur est fabriqué avec un matériau présentant une bonne conductivité thermique qui est meilleure que celle de l'air, ce qui permet d'améliorer l'efficacité de l'échange de chaleur.
- Le matériau présentant une bonne conductivité thermique de l'échangeur de chaleur est par exemple de l'aluminium ou du cuivre. On entend par bonne conductivité thermique un facteur de conductivité thermique du matériau supérieur à 200 W/m˙K.
- L'échangeur de chaleur est fabriqué par impression 3D. Dans la pratique, le canal secondaire de l'échangeur de chaleur est conçu par calcul thermodynamique, et sa forme est relativement précise et complexe. Par le biais d'une technique d'impression 3D (par exemple DMLS, « Direct Metal Laser Sintering » en anglais, c'est-à-dire frittage direct de métal par laser), il est possible de réaliser dans toute la mesure du possible un canal secondaire complexe et d'optimiser le débit du fluide d'échange de chaleur, tout en évitant tout risque de fuites. Bien sûr, si la situation le permet, on peut aussi fabriquer l'échangeur de chaleur par des technologies traditionnelles telle que le fraisage.
- L'échangeur de chaleur comporte en outre au moins un ventilateur, de préférence sur commande. La mise en place ou pas d'un ventilateur est déterminée par les calculs et le design du canal secondaire ; cela permet d'améliorer le refroidissement et l'efficacité de l'échange de chaleur avec l'environnement. Un échangeur de chaleur muni d'un ventilateur forme un échangeur de chaleur actif. De préférence, le ventilateur est sur commande, c'est-à-dire que le système peut, en fonction des besoins de refroidissement du moule, choisir de démarrer ou non le ventilateur. Dès lors, l'échangeur de chaleur peut être configuré alternativement en mode actif et en mode passif.
- L'échangeur de chaleur est équipé d'une sonde de température et/ou d'une sonde de débit, de façon à pouvoir détecter et ajuster de manière précise la capacité d'échange de chaleur de l'échangeur de chaleur ; cela permet aussi d'obtenir des informations importantes concernant la température et/ou le débit du circuit d'échange de chaleur.

En outre, le système de moulage selon la présente invention peut également être utilisé pour chauffer le moule. Dans ce mode de mise en oeuvre, une cartouche de chauffage est installée à l'extérieur de l'échangeur de chaleur afin de réaliser l'isolation thermique de l'échangeur de chaleur. Dans ce cas on n'installe ni radiateur ni ventilateur. On garantit dès lors une haute température stable dans le moule.

Des explications détaillées complémentaires sont données ci-dessous en s'appuyant sur les figures annexées. Les techniciens du domaine comprendront facilement que ces figures annexées ne sont données que dans un but explicatif, et qu'elles ne sont en aucune façon destinées à limiter l'étendue de la protection de la présente invention. Des indications identiques dans les figures correspondent à des éléments identiques et similaires. Pour les besoins de l'explication, il est possible que ces figures ne soient pas complètement à l'échelle.
- La Figure 1 représente de façon schématique un système de moulage comportant un système d'échange de chaleur selon l'art antérieur ;
- La Figure 2 représente de façon schématique un détail d'un système d'échange de chaleur selon l'art antérieur ;
- La Figure 3 représente de façon schématique un système de moulage selon un mode de réalisation de la présente invention ;
- La Figure 4 représente de façon schématique un détail d'un système d'échange de chaleur selon un mode de réalisation de la présente invention ;
- La Figure 5 est une vue schématique d'un échangeur de chaleur selon un mode de réalisation de la présente invention ;
- La Figure 6 est une vue schématique en 3D d'un échangeur de chaleur selon un mode de réalisation de la présente invention.

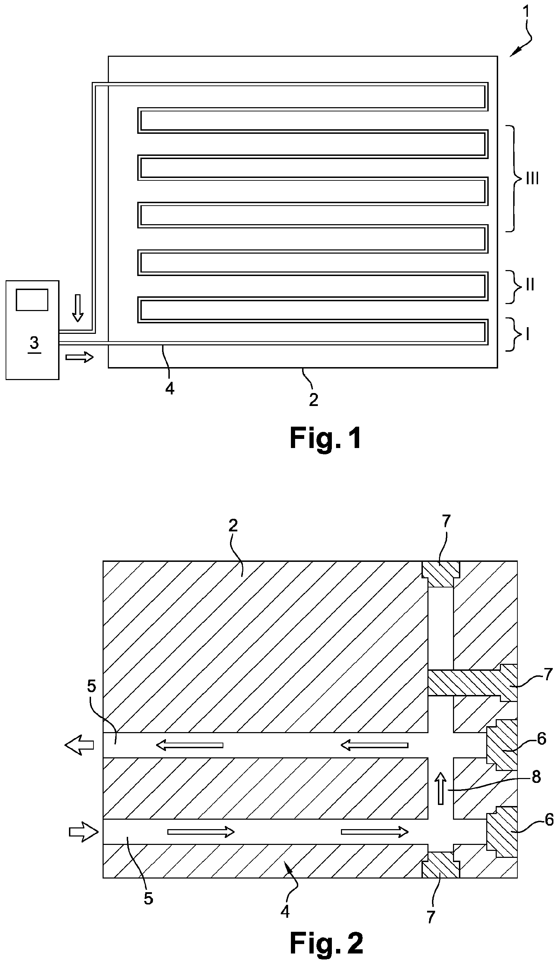

La Figure 1 représente un système de moulage 1 selon l'art antérieur, comprenant un moule 2 et un thermo-régulateur 3. À proximité de la surface de moulage du moule 2 est intégré un circuit d'échange de chaleur 4 alimenté par le thermo-régulateur 3. Le thermo-régulateur 3 alimente par pompage le circuit d'échange de chaleur 4, dans la direction indiquée, avec un fluide d'échange de chaleur (dans la présente invention, il s'agit d'eau de refroidissement), de façon à ce que la surface de moulage conserve une température inférieure à celle du matériau plastique fondu qui se trouve dans le moule et aide ainsi à son formage par refroidissement. Cependant, une fois l'eau de refroidissement entrée dans le circuit d'échange de chaleur 4, si elle peut conserver sa température initiale dans la portion I, sa température commence à s'élever dans la portion II et, dans la portion III, la température est presque identique à celle de la surface de moulage, elle ne peut donc plus abaisser la température de la surface de moulage pour aider à la formation de la pièce en plastique. Cette situation est particulièrement sensible au début du moulage ; le refroidissement non uniforme conduit à un temps de formage différent d'une partie à l'autre de la pièce moulé, ce qui peut provoquer un formage non uniforme.

La Figure 2 montre un détail partiel d'un circuit d'échange de chaleur selon l'art antérieur. Notons que la Figure 2 ne montre de façon schématique qu'une partie de la structure du circuit d'échange de chaleur, elle ne correspond pas tout à fait à l'échangeur de chaleur de la Figure 1. Comme illustré sur la Figure 2, le circuit d'échange de chaleur est principalement constitué de deux canaux 5 et 8 se trouvant dans le moule 2 et est délimité par des bouchons 6 et 7 mis en place à l'extrémité ou au centre du canal 5. Concrètement, dans le moule 2, à proximité de la surface de moulage, se trouve un canal transversal 5 et un canal longitudinal 8 ; pour faire en sorte que le fluide d'échange de chaleur s'écoule dans la direction indiquée par les flèches, des bouchons 6 sont mis en place à l'extrémité droite du canal transversal 5 et des bouchons 7 mis en place aux deux extrémités et au milieu du canal longitudinal 8, de façon à délimiter le circuit d'échange de chaleur 4.

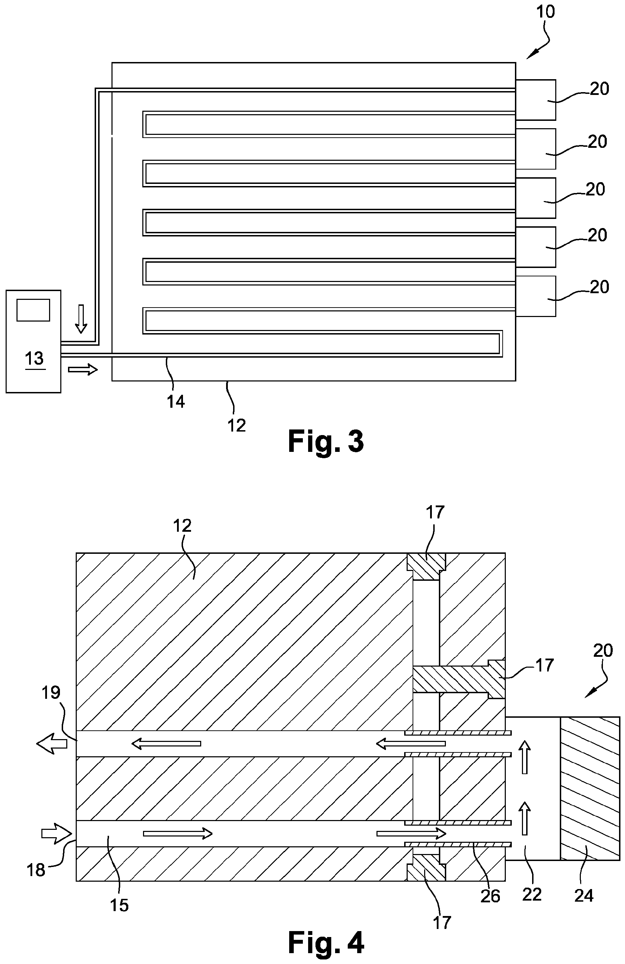

La Figure 3 représente un système de moulage 10 selon un mode de réalisation de la présente invention, qui comporte un moule 12 et un thermo-régulateur 13; un circuit d'échange de chaleur 14 partiellement intégré dans le moule 12. Dans le présent exemple, pour faciliter l'illustration, le système de moulage ne comporte qu'un circuit d'échange de chaleur 14 et qu'un thermo-régulateur 13 qui alimente ce circuit. Mais il convient de comprendre qu'en réalité le système de moulage comprend souvent plusieurs circuits d'échange de chaleur et que chaque circuit d'échange de chaleur est alimenté par un thermo-régulateur qui sert à pomper un fluide d'échange de chaleur de température prédéterminée dans les circuits d'échange de chaleur et à récupérer à partir du circuit d'échange de chaleur le fluide d'échange de chaleur qui a mené à bien un cycle, puis à le refroidir (ou à le chauffer) à la température prédéterminée. Comme illustré sur la Figure 3, le système de moulage 10 comporte également plusieurs échangeurs de chaleur 20 se trouvant à l'extérieur du moule 12. En l'occurrence, leur rôle est de laisser l'eau de refroidissement qui a commencé à chauffer hors du moule pendant un certain temps, afin de lui permettre de refroidir grâce à la transmission de chaleur avec l'environnement, avant de la renvoyer dans le moule. A cet effet, des canaux secondaires 34 sont disposés dans les échangeurs de chaleur 20; ces canaux secondaires 34 constituent une partie du circuit d'échange de chaleur 14.

Bien entendu, lorsqu'il y a plusieurs circuits d'échange de chaleur, on peut envisager de munir chaque circuit d'échange de chaleur d'un ou de plusieurs échangeurs de chaleur ou de ne mettre en place des échangeurs de chaleur que dans un certain nombre de circuits d'échange de chaleur, les autres circuits d'échange de chaleur conservant la disposition structurelle de l'art antérieur. Cela est possible parce que la présente invention permet d'associer facilement les échangeurs de chaleur avec les moules existants, sans qu'il soit nécessaire de modifier la structure interne des moules existants.

La Figure 4 montre de façon schématique une partie de la structure d'un circuit d'échange de chaleur 14 selon la présente invention. De façon analogue à la Figure 2, la Figure 4 ne montre de façon schématique qu'une partie de la structure du circuit d'échange de chaleur et cela ne correspond pas entièrement au circuit d'échange de chaleur de la Figure 3. Dans cet exemple, le circuit d'échange de chaleur 14 comprend une entrée 18, un canal principal 15 intégré au moule 12, un canal secondaire intégré au boîtier 22 du circuit d'échange de chaleur 14, ainsi qu'une sortie 19 ; le circuit est partiellement délimité par des bouchons 17. Par ailleurs, l'échangeur de chaleur 20 est muni d'un radiateur thermique 24 placé autour du boîtier 22, de façon à permettre une meilleure transmission de la chaleur. Le boîtier 22 communique avec le canal principal 15 par l'insertion d'une conduite 26 dans le canal principal 15, ce qui permet l'introduction du fluide d'échange de chaleur dans le canal secondaire du boîtier 22 de façon à assurer la circulation dans le canal secondaire, afin d'atteindre l'objectif de refroidissement. Dans cet exemple, le boîtier 22 et le radiateur thermique 24 sont fabriqués avec un matériau présentant une bonne conductivité thermique, comme l'aluminium ou le cuivre ; ils peuvent être fabriqués à partir d'un même matériau, ou bien à partir de plusieurs matériaux différents.

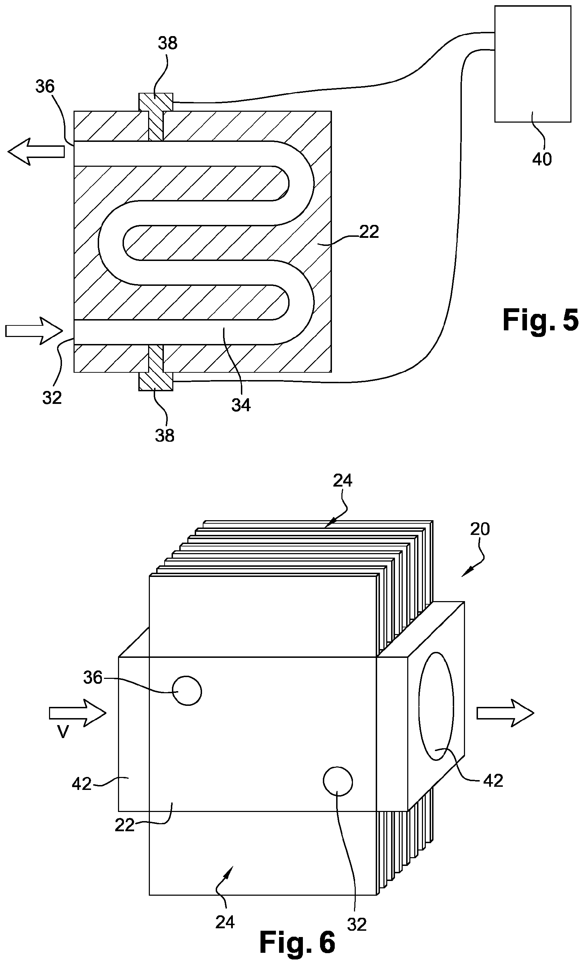

La Figure 5 est une vue schématique de section du boîtier 22 d'un échangeur de chaleur 20 selon la présente invention. En réalité, le boîtier 22 comporte des plissures, de façon à augmenter la surface de contact avec l'air de la paroi du canal secondaire 34. La forme du canal secondaire 34 a été conçue par calcul thermodynamique, elle est relativement précise et complexe. C'est pourquoi on choisit de préférence l'impression 3D (par exemple DMLS, frittage direct de métal par laser) pour fabriquer le boîtier 22. Cela permet de réaliser de façon optimale le très complexe canal secondaire 34 et d'optimiser le débit du fluide de refroidissement, tout en évitant tout risque de fuite. Des sondes de température 38 sont respectivement disposées à proximité de l'entrée 32 et de la sortie 36 du canal secondaire 34 de l'échangeur de chaleur 20 ont été placées d. Ces sondes peuvent être reliées à un contrôleur 40 afin de pouvoir mesurer et ajuster de façon précise la capacité d'échange de chaleur de l'échangeur de chaleur et à recueillir des informations importantes relatives aux différents circuits d'échange de chaleur. On peut aussi envisager de mettre en place des sondes de débit sur les positions adaptées.

La Figure 6 est une vue schématique en 3D d'un échangeur de chaleur 20. L'échangeur de chaleur 20 comprend un boîtier 22, un radiateur thermique 24 et deux ventilateurs sur commande 42. On comprend que la face illustrée en vue principale de l'échangeur de chaleur 20 est la face qui est accolée au moule 12. Sur cette face se trouvent l'entrée 32 et la sortie 36 du canal secondaire 34. Les radiateurs thermiques 24 se trouvent au-dessus et au-dessous du boîtier 22 et servent à renforcer la capacité d'échange de chaleur du boîtier 22. Des ventilateurs 42 sont placés à gauche et à droite du boîtier 22 ; lorsqu'ils sont en marche, ils fournissent pour le boîtier 22 un flux d'air dans la direction indiquée par la flèche V. La mise en place des ventilateurs est déterminée par les calculs et le design pour le canal secondaire 34. Les ventilateurs permettent de renforcer l'efficacité de l'échange de chaleur entre le fluide de refroidissement et l'environnement. Dès lors, l'échangeur de chaleur 20 constitue un échangeur de chaleur actif. En l'occurrence, le système peut, en fonction des besoins de refroidissement du moule 12, choisir de démarrer ou de ne pas démarrer les ventilateurs 42. Ainsi, l'échangeur de chaleur 20 peut être alternativement configuré en mode actif et en mode passif.

Le moule 12 peut être un moule à compression ou un moule à injection pour des matières thermoplastique ou thermodurcissable, ou encore tout autre moule ayant besoin de procéder au refroidissement de la matière plastique fondue se trouvant dans sa cavité. Par ailleurs, le moule 12 peut également être un moule chauffant, c'est-à-dire un moule qui doit conserver une température supérieure à la température de l'environnement en cours de production. Dans ce cas, à l'extérieur de l'échangeur de chaleur 20 peut être mis en place une cartouche de chauffage du fluide d'échange de chaleur, pour faire en sorte que l'échangeur de chaleur se trouve isolé thermiquement. Dans ce cas, on ne prévoit plus de radiateur thermique ni de ventilateur. Dès lors, on peut garantir à peu de frais que la température du fluide d'échange de chaleur dans le circuit d'échange de chaleur du moule ne baisse pas trop vite.

Les figures annexées et les explications qui précèdent décrivent des modes de réalisation non limitatifs de la présente invention. Pour expliquer les principes de l'invention, des aspects conventionnels ont été simplifiés ou omis. L'homme du métier comprend que les variantes de ces modes de réalisation tombent dans le domaine de la présente invention. L'homme du métier comprend également que les caractéristiques décrites ci-dessus peuvent être associées de multiples façons pour constituer de nombreuses variantes de la présente invention. Dès lors, la présente invention ne se limite pas aux modes de réalisation spécifiquement présentés ci-avant, et n'est limité que par les revendications et leurs équivalents.

## Revendications

1. Système de moulage (10) des pièces en plastique, com
portant un moule (12) et au moins un thermo-régulateur (13), au moins un circuit d'échange de chaleur (14) étant au moins partiellement intégré dans le moule (12), chaque thermo-régulateur (13) alimentant un des circuits d'échange de chaleur (14), le système de moulage étant **caractérisé en ce qu'**il comporte au moins un échangeur de chaleur (20) situé à l'extérieur du moule (12) et comprenant un canal secondaire (34) qui constitue une partie de l'échangeur de chaleur (14).

2. Système de moulage (10) selon la revendication 1, dans lequel l'échangeur de chaleur (20) est constitué d'un boîtier (22) en accordéon.

3. Système de moulage (10) selon la revendication 2, dans lequel un radiateur de chaleur (24) est formé autour du boîtier (22).

4. Système de moulage (10) selon la revendication 1, dans lequel l'échangeur de chaleur (20) est fabriqué dans un matériau dont la conductivité thermique est supérieure à 200 W/m˙K.

5. Système de moulage (10) selon la revendication 4, dans lequel le matériau est de l'aluminium ou du cuivre.

6. Système de moulage (10) selon la revendication 1, dans lequel l'échangeur de chaleur (20) est fabriqué par impression 3D.

7. Système de moulage (10) selon la revendication 1, dans lequel l'échangeur de chaleur (20) comprend en outre au moins un ventilateur (42).

8. Système de moulage (10) selon la revendication 7, dans lequel le ventilateur (42) est un ventilateur sur commande.

9. Système de moulage (10) selon la revendication 1, dans lequel l'échangeur de chaleur (20) est équipé d'une sonde de température (38) et/ou une sonde de débit.

10. Système de moulage (10) selon la revendication 1, dans lequel l'échangeur de chaleur (20) est équipé d'une cartouche de chauffage pour réchauffer le circuit d'échange de chaleur.
